# EUROPEAN PATENT SPECIFICATION

(11) **EP 0 404 260 B1**
(45) Date of publication and mention of the grant of the patent: **01.09.1993**
(21) Application number: 90201604.7
(22) Date of filing: 19.06.1990
(51) Int. Cl.: F23D 14/78, F23D 14/02

(54) **Laminated burner structure**
Mehrschichtiges Gefüge für Brenner
Structure stratifiée de brûleur

(30) Priority: 21.06.1989 NL 8901559
(43) Date of publication of application: 27.12.1990
(73) Proprietor: NEFIT FASTO B.V., NL-7418 BB Deventer (NL)
(72) Inventor: Vloon, Paulus Jacobus, NL-7422 RM Deventer (NL); Wierenga, Hendrik Jacob Lammert, NL-8196 KC Welsum (NL)
(74) Representative: Mertens, Hans Victor

(56) References cited:
- AT-B- 387 272
- FR-A- 1 217 341
- US-A- 2 484 123

## Description

The invention relates to a burner for a heating device, said burner being provided with ducts for the supply of a mixture of gaseous fuel and air.

Such a burner is generally known in a large number of embodiments, and is used, for example, in a central heating system for heating central heating water, in a geyser for heating domestic water or in a combined heating device for heating central heating water as well as domestic water (see for example, US-A-2 484 123).

A disadvantage of the known burners, which are usually produced from formed plate material, is their generally high flame temperature which leads to high Noₓ concentration in the flue gases of the burners. This is undesirable from a point of view of fighting environmental pollution.

Beside the burners mentioned before, low-NOₓ burners are known, but a disadvantage of these burners is the turbulency of the flame, which makes the flame difficult to stabilize. The reason for this is that the stabilization is attained by heating the combustion surface which at a change of delivered power takes a certain amount of time and leads to a change in combustion surface temperature. The last-mentioned effect shortens the life time of the burner.

An object of the invention is to provide an improved low-NOₓ burner.

This object is achieved according to the invention in that the burner is made up of a number of plate-type elements which are placed against each other and are connected to each other to form a unit, said elements defining ducts through which a cooling medium can flow.

Constructing a burner from plate-type elements makes it possible to very simply form ducts separated from each other in the burner for the supply of the mixture of gaseous fuel and air on the one hand and a cooling medium on the other. Of course, different ducts may contain different cooling media, if convenient.

The use of a cooling medium is particularly advantageous, because firstly the gas/air mixture can be cooled with the cooling medium before combusting it, and secondly the combustion surface can be cooled with the cooling medium. Both measures result in a reduced flame temperature, which in turn results in a relatively low production of NOx at the combustion.

In a preferred embodiment of the burner according to the invention the gas/air mixture flows to the combustion surface through long, straight ducts. Accordingly, a laminar flow of the gas mixture can be attained, which yields a laminar flame as well that can be stabilized and modulated particularly well over a large power range. Instantly after ignition the flame is stable, and instantly the NOₓ - concentration in the flue gases is low. Moreover, the flame stays stable under all working conditions. It has been found that the ratio between the smallest and the largest power to be set may be 1 : 10, under which largely varying working conditions, the temperature of the combustion surface may, due to the operation of the cooling medium, remain stable at, for example, 60°C. This has a very favourable effect on the life time of the burner.

To obtain a well-cooled combustion surface, the ducts for the cooling medium are situated advantageously at least partially near the combustion surface of the burner.

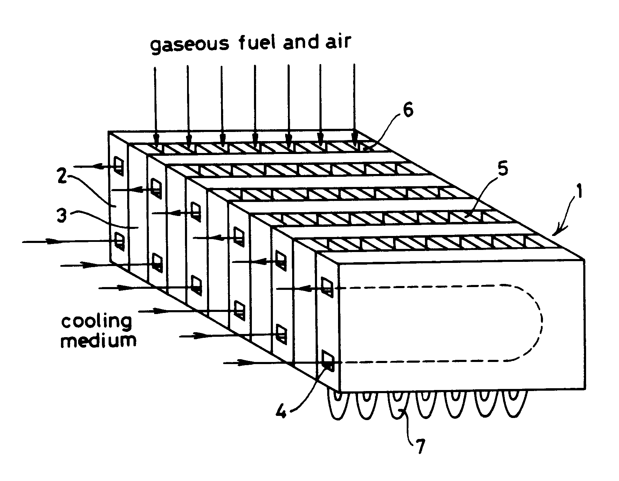

The invention is illustrated in more detail with the aid of the drawing, which in a single figure shows a preferred embodiment of the burner according to the invention in a schematic perspective view.

In the figure the burner 1 is made up of a number of plate-type elements 2 and 3 which are placed against each other and are connected to each other to form a unit. Each of the elements 2 or 3 in itself can be made up of thinner plate-type elements to obtain the desired structure and dimensions.

The elements 2 contain a duct 4, the course of which is indicated with a dashed line. A cooling medium can flow through the duct 4 in the direction of the arrows at the duct inlet and outlet side.

The elements 3 are provided alternating with the elements 2, and comprise a number of strips 5 which are placed in a vertical direction and define ducts 6 for the supply of a mixture of gaseous fuel and air, the mixture being fed in the direction of the arrows near the duct inlet side and being combusted with laminar flames 7 at the opposing side of the burner 1.

The cooling medium flowing through the ducts 4 cools the burner and particularly the supply ducts for the gas/air mixture and the combustion surface at the foot of the flames 7.

## Claims

1. Burner (1) for a heating device, made up of a number of alternating first and second plate-type elements (2, 3) which are placed against each other and are interconnected to form a unit, said second plate-type elements (3) defining ducts (6) through which mixture of gaseous fuel and air can flow to a combustion surface of the unit, said first plate-type elements defining ducts (4) through which a cooling medium can flow, **characterized in that** the ducts (6) through which a mixture of gaseous fuel and air can flow as well as the ducts (4) through which a cooling medium can flow are each situated in their entirety in one plate-type element (3, 2), the axes of the ducts (6, 4) extending in the plane of the plate-type elements (3, 2).

2. Burner according to claim 1, **characterized in that** the ducts (6) for a mixture of gaseous fuel and air are straight and extend from a duct inlet side at one edge of a plate-type element (3) to a duct outlet side at the combustion surface at the opposing edge of the same plate-type element (3).

3. Burner according to claim 1 or 2, **characterized in that** means are provided to apply a different cooling medium to different plate-type elements (2) on either side of a plate-type element (3) with ducts (6) through which a mixture of gaseous fuel and air can flow.

## Patentansprüche

1. Brenner (1) für eine Heizanlage, bestehend aus mehreren abwechselnd angeordneten ersten und zweiten plattenförmigen Elementen (2,3), die aneinander liegen und miteinander zu einer Einheit verbunden sind, wobei die zweiten plattenförmigen Elemente (3) Kanäle (6) bilden für den Durchfluß eines Gemisches aus gasförmigen Brennstoff und Luft zu einer Verbrennungsoberfläche der Einheit, und die ersten plattenförmigen Elemente (2) Kanäle (4) bilden für den Durchfluß eines Kühlmittels, dadurch gekennzeichnet, daß die Kanäle (6) für den Durchfluß eines Gemisches aus gasförmigen Brennstoff und Luft wie auch die Kanäle (4) für den Durchfluß eines Kühlmittels jeweils in ihrer Gesamtheit in einem plattenförmigem Element (3,2) angeordnet sind, wobei sich die Achsen der Kanäle (6,4) in der Ebene der plattenförmigen Elemente (3,2) erstrecken.

2. Brenner nach Anspruch 1, dadurch gekennzeichnet, daß die Kanäle (6) für ein Gemisch aus gasförmigen Brennstoff und Luft gerade verlaufen und sich von einer Kanaleinlaßseite an einem Rand eines plattenförmigen Elementes (3) erstrecken nach einer Kanalauslaßseite an der Verbrennungsoberfläche am gegenüberliegenden Rand desselben plattenförmigen Elementes (3).

3. Brenner nach Anspruch 1 oder 2, dadurch gekennzeichnet, daß Mittel vorgesehen sind für die Zufuhr eines gesonderten Kühlmittels zu den verschiedenen plattenförmigen Elementen (2) an beiden Seiten eines plattenförmigen Elementes (3) mit Kanälen (6) für den Durchfluß eines Gemisches aus gasförmigem Brennstoff und Luft.

## Revendications

1. Brûleur (1) pour appareil de chauffage, comportant un certain nombre de premiers et de seconds éléments du type plaque (2, 3), en alternance, qui sont placés les uns contre les autres et sont interconnectés pour former une unité, lesdits seconds éléments (3) définissant des conduits (6) dans lesquels peut passer le mélange de combustible gazeux et d'air qui va vers une surface de combustion de l'unité, lesdits premiers éléments (2) définissant des conduits (4) dans lesquels peut passer un réfrigérant, caractérisé en ce que les conduits (6) dans lesquels peut passer un mélange de combustible gazeux et d'air ainsi que les conduits (4) dans lesquels peut passer un réfrigérant sont chacun situés tout entier dans un seul élément (3, 2), les axes des conduits (6, 4) étant dans le plan des éléments (3, 2).

2. Brûleur suivant la revendication 1, caractérisé en ce que les conduits (6) pour mélange de combustible gazeux et d'air sont droits et vont du côté entrée du conduit, sur un bord d'un élément (3), au côté sortie du conduit, où se trouve la surface de combustion, sur le bord opposé du même élément (3).

3. Brûleur suivant la revendication 1 ou 2, caractérisé en ce que sont prévus des moyens pour appliquer un réfrigérant différent à des éléments (2) différents, des deux côtés d'un élément (3) comportant des conduits (6) dans lesquels peut passer un mélange de combustible gazeux et d'air.
